(19) Europäisches Patentamt
European Patent Office
Office européen des brevets

(11) **EP 4 741 972 A1**

(12) **EUROPEAN PATENT APPLICATION**

(43) Date of publication:
**13.05.2026 Bulletin 2026/20**

(21) Application number: **25197876.3**

(22) Date of filing: **25.08.2025**

(51) International Patent Classification (IPC):
**G05D 1/227** (2024.01)   **G05D 109/20** (2024.01)
**G08C 17/00** (2006.01)   **G08C 13/00** (2006.01)

(52) Cooperative Patent Classification (CPC):
**G05D 1/2274; G05D 1/2279; G08C 17/00;**
G05D 2109/22

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.11.2024 KR 20240158451**

(71) Applicants:
• **Hyundai Motor Company**
  **Seoul 06797 (KR)**

• **Kia Corporation**
  **Seoul 06797 (KR)**

(72) Inventor: **LIM, Jun Young**
  **18280 Hwaseong-si, Gyeonggi-do (KR)**

(74) Representative: **Viering, Jentschura & Partner
mbB**
  **Patent- und Rechtsanwälte**
  **Am Brauhaus 8**
  **01099 Dresden (DE)**

(54) **METHOD, DEVICE AND SYSTEM FOR REMOTELY CONTROLLING A MOBILITY DEVICE**

(57) A method for remotely controlling a mobility device includes, from a first remote pilot station having control of a mobility device via a communication link with the mobility device, receiving, by a second remote pilot station, a lost link signal indicating a failure in the communication link, of the first remote pilot station, with the mobility device. The second remote pilot station is one of at least one neighboring remote pilot station, of the first remote pilot station, that has received the lost link signal. The method further includes: transmitting, by the second remote pilot station, a broadcast signal; receiving, by the second remote pilot station from the mobility device, a response signal requesting transfer of control of the mobility device; and remotely controlling, by the second remote pilot station and based on the response signal, one or more operations of the mobility device.

FIG.4

Processed by Luminess, 75001 PARIS (FR)

**Description**

## CROSS-REFERENCE TO RELATED APPLICATION

This application claims priority to Korean Patent Application No. 10-2024-0158451, filed in the Korean Intellectual Property Office on November 8, 2024, the entire contents of which are incorporated herein by reference.

## TECHNICAL FIELD

The present disclosure relates to a method, a device, and a system for remotely controlling a mobility device.

## BACKGROUND

With the advancement of technologies related to unmanned aerial vehicle (UAV) systems, mobility devices are being utilized in various fields, including cargo transportation, crop protection, fire suppression, crime control, land surveying, port management, underwater drones, and so forth.

A mobility device may refer to a system that includes aircraft that flies automatically or semi-automatically along a pre-programmed path from the ground without a human pilot on board, payload equipment, ground control equipment, communications equipment, support equipment, and/or personnel.

Along the flight routes of mobility devices, remote control devices, such as a ground control system (GCS), ground radio station, or unmanned aircraft (UA), may be installed for remotely controlling the mobility devices. Each remote control device may support communication within a certain range.

However, due to the characteristics of mobility device operation systems, a mobility device may fail to establish or maintain a communication link with the remote control device if the mobility device moves out of the communication coverage area or encounters issues with the aircraft's status or communication systems. A mobility device that is disconnected from the remote control station may face high-risk situations.

## SUMMARY

The present disclosure has been made to solve the above-mentioned problems occurring in the prior art while advantages achieved by the prior art are maintained intact.

An aspect of the present disclosure provides a method, a device, and a system for remotely controlling a mobility device, which maintain a communication link between a mobility device and a remote pilot station by transferring control of the mobility device to a neighboring remote pilot station if the communication link between the mobility device under the control of a remote pilot station and the remote pilot station has failed or is unstable.

The technical problems to be solved by the present disclosure are not limited to the aforementioned problems, and any other technical problems not mentioned herein will be clearly understood from the following description by those skilled in the art to which the present disclosure pertains.

According to one or more example embodiments of the present disclosure, a method may include: from a first remote pilot station having control of a mobility device via a communication link with the mobility device, receiving, by a second remote pilot station, a lost link signal indicating a failure in the communication link, of the first remote pilot station, with the mobility device. The second remote pilot station may be one of at least one neighboring remote pilot station, of the first remote pilot station, that has received the lost link signal. The method may further include: transmitting, by the second remote pilot station, a broadcast signal; receiving, by the second remote pilot station from the mobility device, a response signal requesting transfer of control of the mobility device; and remotely controlling, by the second remote pilot station and based on the response signal, one or more operations of the mobility device.

The failure in the communication link may include: at least a threshold time amount elapsing after receiving, from the mobility device, flight information. The flight information may include at least one of: a flight plan for the mobility device, a flight status of the mobility device, a last position of the mobility device, a heading of the mobility device, or a speed of the mobility device.

Receiving the lost link signal may include: receiving, by the second remote pilot station from the first remote pilot station, flight information that was most recently sent, before the failure, to the first remote pilot station from the mobility device.

Transmitting the broadcast signal may include: determining, by the second remote pilot station and based on the flight information, a predicted flight route of the mobility device; and transmitting, by the second remote pilot station, the predicted flight route to at least one other remote pilot station of the at least one neighboring remote pilot station of the first remote pilot station.

Transmitting the broadcast signal may include: receiving, by the second remote pilot station from a plurality of remote pilot stations of the at least one neighboring remote pilot station of the first remote pilot station, a plurality of predicted flight routes of the mobility device; comparing, by the second remote pilot station, the plurality of predicted flight routes; and, based on the plurality of predicted flight routes differing by more than a threshold amount, determining, by the second remote pilot station, a second predicted flight route based on a most commonly searched predicted point, which is selected from the plurality of predicted flight routes searched at a predetermined time interval.

The broadcast signal may include an address information associated with the second remote pilot station. The response signal may include an acknowledgement response signal. The method may further include: transmitting, by the second remote pilot station and based on receiving the acknowledgement response signal, a mobility device detect signal to the plurality of remote pilot stations. The mobility device detect signal may be configured to cause the plurality of remote pilot stations to suspend predicting of one or more flight routes of the mobility device.

Remotely controlling the one or more operations of the mobility device may include: remotely controlling, by the second remote pilot station, the one or more operations of the mobility device further based on the second predicted flight route.

Receiving the response signal may include: taking over, by the second remote pilot station and based on the response signal, control of the mobility device from the first remote pilot station.

According to one or more example embodiments of the present disclosure, a remote pilot station may include: a processor; and a memory storing at least one instruction that is configured, when executed by the processor communicating with the memory, to cause the remote pilot station to: detect a failure in a communication link between the remote pilot station and a mobility device; transmit, based on detecting the failure, a first lost link signal to at least one neighboring remote pilot station of the remote pilot station; transmit, based on receiving a second lost link signal, a broadcast signal; based on receiving, from the mobility device, a response signal requesting transfer of control of the mobility device, take over control of the mobility device; and remotely control, based on the response signal, one or more operations of the mobility device.

The at least one instruction may be configured, when executed by the processor communicating with the memory, to cause the remote pilot station to detect the failure by: updating and storing flight information of the mobility device. The flight information may be received from the mobility device at predetermined time intervals. The flight information may include at least one of: a flight plan for the mobility device, a flight status of the mobility device, a last position of the mobility device, a heading of the mobility device, or a speed of the mobility device; and determining that at least a threshold time amount has elapsed since a last transmission of the flight information from the mobility device.

The at least one instruction may be configured, when executed by the processor communicating with the memory, to further cause the remote pilot station to: determine, based on the flight information that was last received by the remote pilot station from the mobility device, a first predicted flight route; determine, based on the flight information and the first predicted flight route, an expected communication coverage area of the mobility device; and determine the at least one neighboring remote pilot station by selecting at least one remote pilot station that is located in the expected communication coverage area.

The at least one instruction may be configured, when executed by the processor communicating with the memory, to further cause the remote pilot station to transmit the broadcast signal by: receiving, from another remote pilot station, flight information of the mobility device; determining, based on the flight information, a predicted flight route of the mobility device; and transmitting the predicted flight route to one or more other remote pilot stations.

The at least one instruction may be configured, when executed by the processor communicating with the memory, to cause the remote pilot station to transmit the broadcast signal by: receiving, from a plurality of remote pilot stations, a plurality of predicted flight routes of the mobility device; comparing the plurality of predicted flight routes; and, based on the plurality of predicted flight routes differing by more than a threshold value, determining a second predicted flight route based on a most commonly searched predicted point, which is selected from the plurality of predicted flight routes searched at a predetermined time interval.

The at least one instruction may be configured, when executed by the processor communicating with the memory, to cause the remote pilot station to remotely control the one or more operations of the mobility device further based on the second predicted flight route.

The at least one instruction may be configured, when executed by the processor communicating with the memory, to further cause the remote pilot station to: transmit, after transmitting the broadcast signal and based on receiving an acknowledge response from the mobility device, a mobility device detect signal.

The at least one instruction may be configured, when executed by the processor communicating with the memory, to further cause the remote pilot station to suspend, based on receiving a mobility device detect signal, determining and transmitting of a predicted flight route of the mobility device.

The at least one instruction may be configured, when executed by the processor communicating with the memory, to further cause the remote pilot station to store information associated with transferring control of the mobility device.

According to one or more example embodiments of the present disclosure, a system may include: a first remote pilot station having at least one neighboring remote pilot station; a second remote pilot station located at a predetermined distance away from the first remote pilot station, the second remote pilot station being one of the at least one neighboring remote pilot station of the first remote pilot station; and a mobility device configured to fly under control of the first remote pilot station. The first remote pilot station is configured to: detect a failure in a communication link between the first remote pilot station and the mobility device; and transmit, based on detecting the failure, a lost link signal to the at least one neighboring remote pilot station. The second remote pilot station may be configured to: transmit, based on receiving the lost link signal, a broadcast signal. The mobility device may be further configured to: send, to the second remote pilot station and based on receiving the broadcast signal, a response signal requesting transfer control of the mobility device; and fly, based on sending the response signal to the second remote pilot station, under control of the second remote pilot station.

The mobility device may be further configured to: send, to the first remote pilot station and at predetermined time intervals, flight information including at least one of: a flight plan for the mobility device, a flight status of the mobility device, a last position of the mobility device, a heading of the mobility device, or a speed of the mobility device. The first remote pilot station may be further configured to: determine, based on the flight information, a first predicted flight route; determine, based on the flight information and the first predicted flight route, an expected communication coverage area of the mobility device; and determine the at least one neighboring remote pilot station by selecting at least one remote pilot station that is located in the expected communication coverage area.

The mobility device may be further configured to: store information associated with transferring control from the first remote pilot station to the second remote pilot station.

## BRIEF DESCRIPTION OF THE DRAWINGS

The above and other objects, features and advantages of the present disclosure will be more apparent from the following detailed description taken in conjunction with the accompanying drawings:

FIG. 1 is a block diagram of a system for remotely controlling a mobility device;
FIG. 2 is a block diagram for describing a configuration of a remote pilot station;
FIG. 3 is a conceptual diagram for describing operations for transferring control of a mobility device;
FIG. 4 is a flowchart for describing a method for remotely controlling a mobility device; and
FIG. 5 shows an example computing system.

## DETAILED DESCRIPTION

Hereinafter, one or more example embodiments of the present disclosure will be described in detail with reference to the exemplary drawings. In adding the reference numerals to the components of each drawing, it should be noted that the identical or equivalent component is designated by the identical numeral even if they are displayed on other drawings. Further, in describing the example embodiment(s) of the present disclosure, a detailed description of well-known features or functions will be ruled out in order not to unnecessarily obscure the gist of the present disclosure.

In describing the components of the example embodiment(s) according to the present disclosure, terms such as first, second, "A", "B", (a), (b), and the like may be used. These terms are merely intended to distinguish one component from another component, and the terms do not limit the nature, sequence or order of the constituent components. Unless otherwise defined, all terms used herein, including technical or scientific terms, have the same meanings as those generally understood by those skilled in the art to which the present disclosure pertains. Such terms as those defined in a generally used dictionary are to be interpreted as having meanings equal to the contextual meanings in the relevant field of art, and are not to be interpreted as having ideal or excessively formal meanings unless clearly defined as having such in the present application.

For purposes of this application and the claims, using the exemplary phrase "at least one of: A; B; or C" or "at least one of A, B, or C, " the phrase means "at least one A, or at least one B, or at least one C, or any combination of at least one A, at least one B, and at least one C. Further, exemplary phrases, such as "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

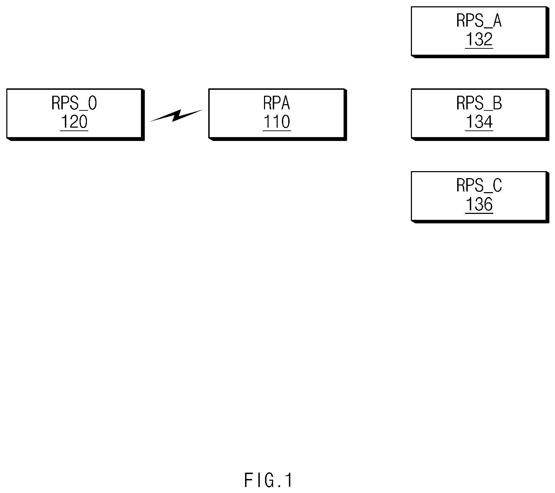

FIG. 1 is a block diagram of a system for remotely controlling a mobility device.

Referring to FIG. 1, a system for remotely controlling a mobility device may include a mobility device 110, a first remote pilot station (also referred to as remotely piloted station) 120, and at least one neighboring remote pilot station 132, 134, 136 including a second remote pilot station 132. Each of the remote pilot stations 120, 132, 134, 136 may be either manned (e.g., a human operator remotely piloting the mobility device 110) or unmanned (e.g., a computer or artificial intelligence remotely piloting the mobility device 110).

FIG. 1 illustrates one mobility device 110 (also referred to as remotely piloted aircraft (RPA)) as an example, but the number of mobility devices may not be limited. Also, while a drone is illustrated as an example of a mobility device, it may be replaced by an aircraft or the like, without limitation.

The mobility device 110 may include a drone, an unmanned helicopter, an unmanned reconnaissance aircraft, or the like. The mobility device 110 may refer to a flying vehicle whose flight-related behavior is controlled by a remote pilot station (RPS) 120 or 130 located, for example, on the ground.

The mobility device 110 may perform manual flight along a predetermined flight route under the control of the remote pilot station 120 or 130. In this case, all flight-related behaviors may be controlled by the remote pilot station 120 or 130 within a communication range with the remote pilot station 120 or 130. The control method may utilize wireless communication, and examples of wireless communication methods may include, but is not limited to, Bluetooth, cellular (3G/4G), Wi-Fi, or satellite. The mobility device 110 may include a global positioning system (GPS), an altimeter, a camera, a gyroscope, or the like.

The mobility device 110 may also include a manned aircraft, an unmanned aircraft, a ground vehicle, a rail vehicle, a ship, or the like.

At least one processor (not shown) provided in the mobility device 110 according to the present disclosure is used to manage the control of the mobility device, such as the mobility device's operation. The processor may be integrated with the mobility device to manage the control of the mobility device by the remote pilot station 120 or 130. Alternatively, the processor may be separately or additionally provided in the remote pilot station 120 or 130 to manage the control of the mobility device.

The remote pilot station 120 or 130 may be at least one of a ground control system (GCS), a ground radio station (GRS), and an unmanned aircraft (UA), and may be any device capable of controlling the mobility device 110 via wireless communication.

The remote pilot station 120 or 130 may control behavior related to flight of the mobility device 110 based on flight route information established for the mobility device 110. The flight route information may include information related to the origin, destination, flight time, weather conditions, and the like of the mobility device 110.

The first remote pilot station 120 may refer to a device that remotely controls the mobility device 110 while in possession of control and in communication with the mobility device 110 before control of the mobility device 110 is transferred to the second remote pilot station 132.

The neighboring remote pilot station 130 may refer to at least one remote pilot station located in a region spaced apart from the first remote pilot station 120, and positioned in an expected communication coverage area capable of communicating with the mobility device 110.

The second remote pilot station 132 may be one of the neighboring remote pilot stations 130 whose broadcast signal is first picked up by the mobility device 110 and thus takes over (e.g., assumes) control of the mobility device 110 from the first remote pilot station 120.

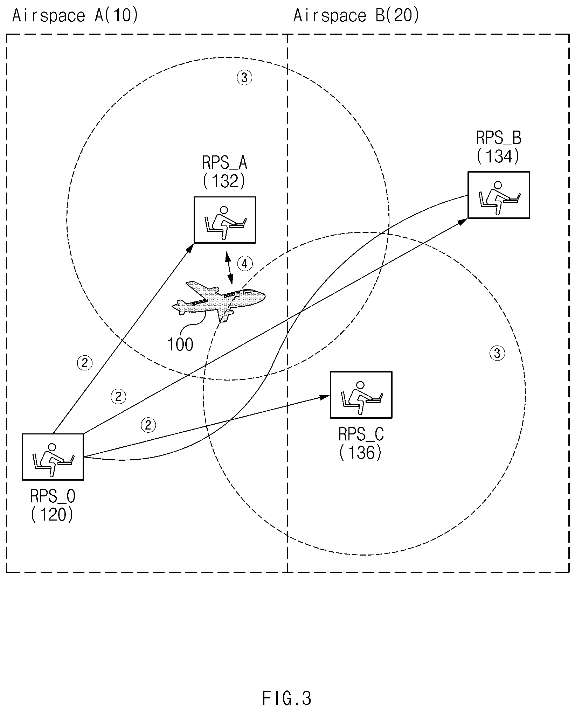

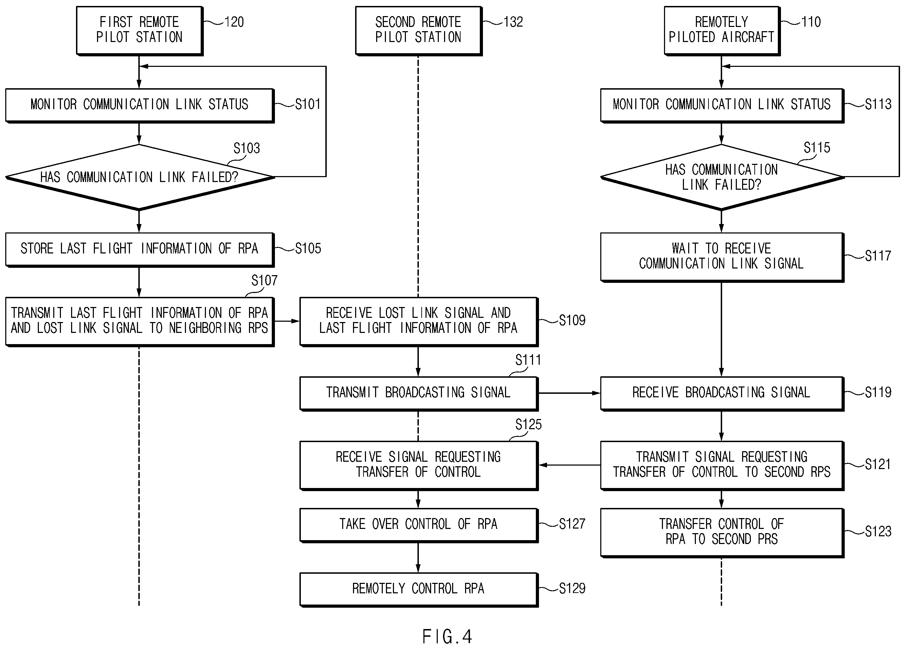

The operations of the mobility device 110, the first remote pilot station 120, the neighboring remote pilot station 130, and the second remote pilot station 132 will now be described with reference to FIGS. 3 and 4.

FIG. 3 is a conceptual diagram for describing operations for transferring control of a mobility device, and FIG. 4 is a flowchart for describing a method for remotely controlling a mobility device.

Referring now to FIGS. 3 and 4, a method for maintaining remote control for the mobility device 110 by transferring control of the mobility device 110 to the second remote pilot station 132 if a communication link between the first remote pilot station 120 and the mobility device 110 is unstable or fails will be described.

The first remote pilot station 120, which has control of the mobility device 110, may monitor the status of the communication link with the mobility device 110 (S101).

Until the first remote pilot station 120 detects a failure in the communication link with the mobility device 110, the method may further include operation of updating and storing, by the first remote pilot station 120, flight information, including at least one of a flight plan, flight status, last position, heading, and speed of the mobility device 110, at a predetermined cycle (e.g., at predetermined time intervals). For example, the first remote pilot station 120 may update and store the flight information at a frequency of no more than 1 Hz. The remote pilot station 120 may detect the failure based on at least a threshold time amount (e.g., a predetermined time interval between regularly scheduled updating of flight information) elapsing after receiving flight information (e.g., since a last transmission of flight information from the mobility device). For example, if the first remote pilot station 120 is scheduled to update and store the flight information at regular intervals (e.g., once per second) but does not receive updated flight information for more than a threshold amount of time (e.g., 1 second), then the first remote pilot station 120 may determine that a failure (e.g., interruption, disconnection, etc.) has occurred in the communication link.

The first remote pilot station 120 may detect that the communication link with the mobility device 110 has failed or the communication link is unstable (S103). For example, as shown in FIG. 3, if the mobility device 110 moves from area "A" 10, which is the communication coverage area of the first remote pilot station 120, to area "B" 20 adjacent to area "A", the communication link between the first remote pilot station 120 and the mobility device 110 becomes unstable or fails because the first remote pilot station 120 is unable to establish a communication link in the area "B" 20. Alternatively, the communication link between the mobility device 110 and the first remote pilot station 120 may not be possible due to airframe conditions or any communication problems.

In such cases, the first remote pilot station 120 may transmit the last stored flight information along with a lost link signal to at least one neighboring remote pilot station 130 according to a predetermined cycle (S105, S107).

The method may further include: prior to S107, determining, by the first remote pilot station 120, a first predicted flight route based on the last flight information; determining, by the first remote pilot station 120, an expected communication coverage area based on the last flight information and the first predicted flight route; and selecting at least one remote pilot station located in the expected area as the at least one neighboring remote pilot station 130.

The second remote pilot station 132 may receive the lost link signal and the last flight information of the first remote pilot station 120 (S109).

As will be described later, the second remote pilot station 132 which is one of the neighboring remote pilot stations 130, may refer to a device that has transmitted a broadcast message that is first received by the mobility device 110.

The second remote pilot station 132, which is one of the at least one neighboring remote pilot stations 130, which has received the lost link signal, may transmit a broadcast signal (S111).

The broadcast signal may include position information, unique identification information, or the like regarding the remote pilot station (e.g., the second remote pilot station 132) that has transmitted the broadcast signal.

S111 may further include: determining, by the at least one neighboring remote pilot station 130 that has received the lost link signal (e.g., one of the remote pilot stations 132, 134, 136), a preliminary predicted flight route based on the last flight information of the mobility device 110; and transmitting, by the at least one neighboring remote pilot station 130 (e.g., one of the remote pilot stations 132, 134, 136), the determined preliminary predicted flight route to at least one other neighboring remote pilot station 130 (e.g., a different one of the remote pilot stations 132, 134, 136).

S111 may further include: comparing, by the second remote pilot station 132, the received preliminary predicted flight routes, the second remote pilot station 132 having received the determined preliminary predicted flight routes from the at least one other neighboring remote pilot station 130; and determining, by the second remote pilot station 132, a second predicted flight route based on the most commonly searched predicted point among the predicted points searched at an arbitrary interval of n seconds, if the preliminary predicted flight routes differ (e.g., from each other) by more than a tolerance criterion (e.g., by more than a threshold amount) .

At S111, if an antenna is directional, the second remote pilot station 132 may transmit a broadcast signal (also referred to as a broadcasting signal) toward the predicted second flight route.

Meanwhile, while monitoring the status of the communication link with the first remote pilot station 120 (S113), if it is detected that the communication link with the mobility device 110 has failed or the communication link is unstable (S115), the mobility device 110 may wait to receive a broadcast signal transmitted from at least one neighboring remote pilot station 130 (S117).

Accordingly, after S111, the mobility device 110 may receive the broadcast signal transmitted by the second remote pilot station 132 (S119).

That is, the at least one neighboring remote pilot station 130 each transmits a broadcast signal, and the mobility device 110 may first receive the broadcast signal from the second remote pilot station 132.

Although the mobility device 110 may subsequently receive broadcast signals from the remaining neighboring remote pilot stations 134 and 136, the mobility device 110 may be configured to ignore the broadcast signals after receiving the first broadcast signal.

S119 may further include: transmitting, by the mobility device 110, an acknowledgement (ACK) response signal to the second remote pilot station 132 based on address information (e.g., an address of the second remote pilot station 132) included in the received broadcast signal; transmitting, by the second remote pilot station 132 that has received the ACK response signal, an RPA detect signal to the other neighboring remote pilot stations 134 and 136; determining, by the other neighboring remote pilot stations 134 and 136, a preliminary predicted flight route upon receipt of the RPA detect signal; and suspending transmission of the determined preliminary predicted flight route to the outside (at least one other neighboring remote pilot station).

The mobility device 110 may transmit a signal requesting transfer of control to the second remote pilot station 132 (S121), and transfer control of the mobility device 110 to the second remote pilot station 132 (S123).

Accordingly, if the second remote pilot station 132 receives the signal requesting transfer of control (S125), the second remote pilot station 132 may perform a process of transferring control of the mobility device 110 from the first remote pilot station 120 based on the signal requesting transfer of control (S127).

In this case, the mobility device 110 may store information about the control while transferring the control from the first remote pilot station 120 to the second remote pilot station 132 (S125).

If the process to transfer control of the mobility device 110 is complete, the second remote pilot station 132 may control the mobility device 110 based on the second predicted flight plan (S129). If the original flight plan is able to be carried out normally, the second remote pilot station 132 may control the flight of the mobility device 110 according to the original flight plan. On the other hand, if it is determined that the original flight plan is unable to be carried out normally, the second remote pilot station 132 may allow the mobility device 110 to perform an emergency response including at least one of returning, emergency landing, and flying, based on a command from the second remote pilot station 132, regardless of the original flight plan.

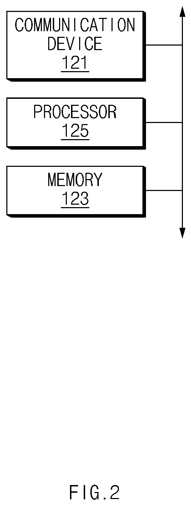

FIG. 2 is a block diagram illustrating a configuration of a remote pilot station.

Referring to FIG. 2, the remote pilot station 120 or 130 may include a communication device 121, a memory 123, and at least one processor 125.

Before each configuration is described, the first remote pilot station 120 may refer to a device that remotely controls the mobility device 110 while in possession of control and in communication with the mobility device 110 before control of the mobility device 110 is transferred to the second remote pilot station 132, the neighboring remote pilot station 130 may refer to at least one remote pilot station located in a region spaced apart from the first remote pilot station 120, and positioned within an expected communication coverage area capable of communicating with the mobility device 110, and the second remote pilot station 132 may refer to one of the neighboring remote pilot stations 130 whose broadcast signal is first picked up by the mobility device 110 and thus takes over (e.g., assumes) control of the mobility device 110 from the first remote pilot station 120.

The communication device 121, the memory 123, and the at least one processor 125 included in each of the remote pilot stations 120 and 130 may implement the same functions if they have the same configuration.

It should be noted that, according to whether the first remote pilot station 120, the neighboring remote pilot station 130, or the second remote pilot station 132 owns the control of the mobility device 110 and the process for transferring the control, the implemented functions may differ even if the configurations are the same, based on whether they are the first remote pilot station 120, the neighboring remote pilot station 130, or the second remote pilot station 132.

The communication device 121 may support a wireless communication link with the mobility device 110. Examples of wireless communication methods may include, but not limited to, Bluetooth, cellular (3G/4G), Wi-Fi, or satellite communication.

The memory 123 may store at least one instruction, programs to perform the process of transfer control, and flight information. If the remote pilot station 120 or 130 owns the control of the mobility device 110, the memory 123 may store information related to the control.

For example, the flight information may include at least one of the ID of the mobility device 110, type of flight, type of aircraft, departure airport, departure time, destination airport, arrival time, flight route points, GPS coordinate points, ATC control area, flight status, flight phase/control mode, and navigation messages. If necessary, data containing the above-described flight information may be added to an open data slot. The flight route points and the ATC control area may be represented as GPS coordinate points.

The at least one processor 125 of the first remote pilot station 120 may detect whether a communication link with the mobility device 110 has been established and, if it is detected that the communication link with the mobility device has failed, transmit a first lost link signal to at least one neighboring remote pilot station.

If the at least one processor 125 of the neighboring remotely piloted station 130 receives a second lost link signal from the outside, the at least one processor 125 of the neighboring remote pilot piloted station 130 may transmit a broadcast signal. This may be considered a function performed in an expected communication coverage area, where the remotely piloted station 130, which does not currently own the control of the mobility device 110, is expected to communicate with the mobility device 110.

If the at least one processor 125 of the second remote pilot station 132 receives a signal requesting to transfer control from the mobility device 110, the at least one processor 125 of the second remote pilot station 132 may perform a process of transferring the control of the mobility device 110.

The at least one processor 125 may update and store flight information, including at least one of the flight plan, flight status, last position, heading, and speed of the connected mobility device 110, at a predetermined cycle. For example, the at least one processor 125 may update and store flight information at a rate of less than 1 Hz. This corresponds to the operation of the first remote pilot station 120 which owns the control before control of the mobility device 110 is transferred to the second remote pilot station 132.

The at least one processor 125 may use the following equations to calculate the predicted flight points of the mobility device 110. In this case, it is assumed that the flight altitude of the mobility device 110 is not adjusted without specific commands from the remote pilot station.

$$P_{lat\_current} = P_{lat} + V_{lat} \times (T_{current} - T_{last})$$

$$P_{long\_current} = P_{long} + V_{long} \times (T_{current} - T_{last})$$

P denotes the last GPS coordinates (e.g., latitude and longitude) of the mobility device 110; $P_{lat\_current}$ denotes the GPS latitude coordinate of the current predicted flight point; $P_{long\_current}$ denotes the GPS longitude coordinate of the current predicted flight point; $P_{lat}$ denotes the latitude coordinate of the last GPS point of the RPA; $P_{long}$ denotes the longitude coordinate of the last GPS point of the RPA; $T_{last}$ denotes the time when a failure in a communication link (e.g., lost link) occurs (e.g., the stored time); $T_{current}$ denotes the current time; $V_{lat}$ denotes the velocity in the latitude direction (e.g., a latitudinal component of the velocity) at the time; and $V_{long}$ denotes the velocity in the longitude direction (e.g., a longitudinal component of the velocity) at the time.

If the at least one processor 125 of the first remote pilot station 120 detects a failure in the communication link with the mobility device 110, the at least one processor 125 of the first remote pilot station 120 may transmit the first lost link signal along with the last flight information, which has been updated and stored at the predetermined cycle, to the neighboring remote pilot station 130.

To this end, the at least one processor 125 of the first remote pilot station 120 may calculate a first predicted flight route based on the last flight information, determine an expected communication coverage area based on the last flight information and the first predicted flight route, and select at least one remote pilot station located in the expected area as at least one neighboring remote pilot station 130.

The at least one processor 125 of the neighboring remote pilot station 130 that has received the lost link signal may calculate a preliminary predicted flight route based on the last flight information of the mobility device 110 and transmit the determined preliminary predicted flight route to at least one other neighboring remote pilot station 130.

The at least one processor 125 of the second remote pilot station, which has received at least one determined preliminary predicted flight route from at least one other neighboring remote pilot station 130, may compare the at least one determined preliminary predicted flight route, and, if the preliminary predicted flight route differs by more than a tolerance criterion, may calculate a second predicted flight route based on the most commonly searched predicted point among the predicted points searched at an arbitrary time interval (e.g., a predetermined time interval) of n seconds.

If the at least one processor 125 of the second remote pilot station 132 receives an ACK response signal transmitted by the mobility device 110 in response to receiving the broadcast signal, the at least one processor 125 of the second remote pilot station 132 may transmit an RPA detect signal to the outside, specifically to at least one neighboring remote pilot station 134 or 136, excluding the second remote pilot station 132 itself.

If the at least one processor 125 of the at least one neighboring remote pilot station 134 or 136 receives a PRA detect signal, the at least one processor 125 of the at least one neighboring remote pilot station 134 or 136 may suspend the calculation of the preliminary predicted flight route and the transmission of the determined preliminary predicted flight route to the outside.

After taking over (e.g., assuming) control of the mobility device 110, the at least one processor 125 of the second remote pilot station 132 may control the mobility device 110 based on the second predicted flight route.

The at least one processor 125 of the second remote pilot station 132 may store information on the control transferred from the first remote pilot station 120.

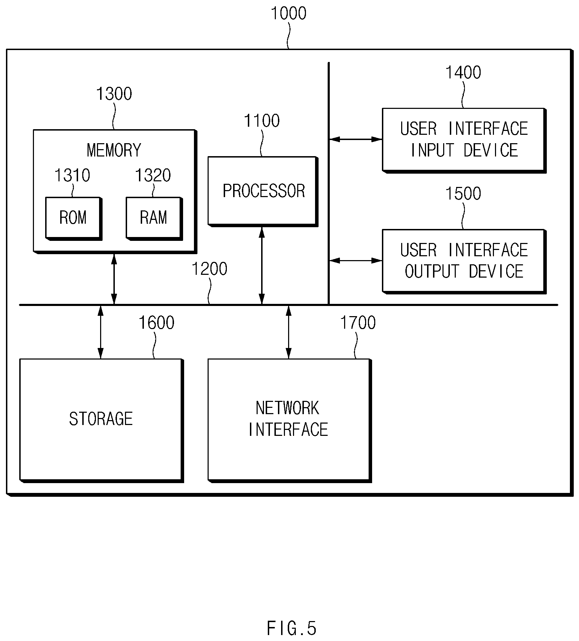

FIG. 5 shows an example computing system (e.g., a computing device of a vehicle, a mobility device, or any other apparatus). One or more controllers, processors, etc. described herein may be implemented by the computing system or may be implemented in the computing system. For example, the remote pilot stations 120, 132, 134, 136 and/or the mobility device 110 may include a computing system 1000 as shown in FIG. 5. One or more components shown in FIG. 5 may correspond to one or more like-named components shown in FIG. 2.

The computing system 1000 may include at least one processor 1100, memory 1300, a user interface input device 1400, a user interface output device 1500, a storage 1600, and a network interface 1700, which are connected with each other via a bus 1200.

The processor 1100 may be a central processing unit (CPU) or a semiconductor device that processes instructions stored in the memory 1300 and/or the storage 1600. Each of the memory 1300 and the storage 1600 may include various types of volatile or nonvolatile storage media. For example, the memory 1300 may include a read-only memory (ROM) and a random access memory (RAM).

Communication interface(s) (also referred to as communication device (s), communicator (s), communication module(s), communication unit(s), etc.), such as the network interface 1700, may allow software and/or data to be transferred between a device and one or more external devices, and/or between one or more components of a device. Communication interface(s) may include a receiver, a transmitter, a transceiver, a modem, a network interface and/or adapter (such as an Ethernet adapter), a radio transceiver, an antenna, a communication port, a Personal Computer Memory Card International Association (PCMCIA) slot and card, or the like. Software and data transferred via communication interface(s) may be in the form of signals, which may be electronic, electromagnetic, optical, infrared, or other signals capable of being received by communication interface(s). These signals may be provided to communication interface(s) via a communication path of a device, which may be implemented using, for example, wire or cable, fiber optics, a cellular link, a radio frequency (RF) link and/or other communications channels. Communication interface(s) may communicate using one or more communication protocols, such as Ethernet, Wi-Fi, near-field communication (NFC), Infrared Data Association (IrDA), Bluetooth, Bluetooth low energy (BLE), Zigbee, Long-Term Evolution (LTE), 5G New Radio (NR), vehicle-to-everything (V2X), a controller area network (CAN), or a local interconnect network (LIN), etc.

Accordingly, the operations of the method or algorithm described in connection with example embodiment(s) disclosed in the specification may be directly implemented with a hardware module, a software module, or a combination of the hardware module and the software module, which is executed by the processor 1100. The software module may reside on a storage medium (i.e., the memory 1300 and/or the storage 1600) such as RAM, a flash memory, ROM, an erasable and programmable ROM (EPROM), an electrically EPROM (EEPROM), a register, a hard disk drive, a removable disc, or a compact disc-ROM (CD-ROM).

The storage medium may be coupled to the processor 1100. The processor 1100 may read out information from the storage medium and may write information in the storage medium. Alternatively, the storage medium may be integrated with the processor 1100. The processor and storage medium may be implemented with an application specific integrated circuit (ASIC). The ASIC may be provided in a user terminal. Alternatively, the processor and storage medium may be implemented with separate components in the user terminal.

According to the present disclosure, if the communication link between a mobility device under the control of a remote pilot station and the remote pilot station has failed or is unstable, the mobility device may maintain the communication link between the mobility device and the remote pilot station by transferring control to a neighboring remote pilot station located on the predicted flight route. Accordingly, the present disclosure may increase the flight stability of a mobile device, reduce the cost of building a commercial infrastructure for a mobile device, and improve operational performance by expanding flight communication coverage. In addition, the increased operational stability further enhances the acceptance of unmanned flight.

According to an aspect of the present disclosure, a method for remotely controlling a mobility device includes (a) detecting, by a first remotely piloted station that owns control of the mobility device, whether a communication link with the mobility device is established, (b) transmitting, by the first remotely piloted station, a lost link signal to at least one neighboring remotely piloted station, if a failure in the communication link with the mobility device is detected, (c) transmitting, by a second remotely piloted station, a broadcasting signal, the second remotely piloted station being one of the at least one neighboring remotely piloted station that has received the lost link signal, (d) receiving, by the mobility device, the broadcasting signal, and (e) transferring, by the mobility device, control of the mobility device to the second remotely piloted station.

The (a) may include (a-1) updating and storing, by the first remotely piloted station, flight information, including at least one of a flight plan, flight status, last position, heading, and speed of the mobility device, at a predetermined cycle before the first remotely piloted station detects the failure in the communication link with the mobility device.

The (b) may further include (b-2) transmitting, by the first remotely piloted station, last flight information, most recently stored according to the predetermined cycle, along with the lost link signal to the at least one neighboring remotely piloted station.

The (b) may further include (b-3) calculating, by the first remotely piloted station, a first predicted flight route based on the last flight information, (b-4) determining, by the first remotely piloted station, an expected communication coverage area based on the last flight information and the first predicted flight route, and (b-5) selecting, by the first remotely piloted station, at least one remotely piloted station located in the expected communication coverage area as the at least one neighboring remotely piloted station.

The (c) may include (c-1) calculating, by the at least one neighboring remotely piloted station which has received the lost link signal, a preliminary predicted flight route based on the last flight information; and (c-2) transmitting, by the at least one neighboring remotely piloted station, the calculated preliminary predicted flight route to at least one other neighboring remotely piloted station.

The (c) may include (c-3) comparing, by the second remotely piloted station, the calculated preliminary predicted flight route, and (c-4) if the preliminary predicted flight route differs by more than a tolerance criterion, calculating, by the second remotely piloted station, a second predicted flight route based on a most commonly searched predicted point, which is selected from the predicted points searched at an arbitrary interval of n seconds.

The (d) may include (d-1) transmitting, by the mobility device, an ACK response signal to the second remotely piloted station based on address information included in the broadcasting signal received, (d-2) transmitting, by the second remotely piloted station that has received the ACK response signal, an RPA detect signal to the other neighboring remotely piloted station, and (d-3) suspending the (c-1) to (c-4) if the other neighboring remotely piloted station receives the RPA detect signal.

The method may further include (f) controlling, by the second remotely piloted station, the mobility device based on the second predicted flight route.

The (e) may include (e-1) transmitting, by the mobility device, a signal requesting transfer of control to the second remotely piloted station, and (e-2) taking over, by the second remotely piloted station, control of the mobility device from the first remotely piloted station based on the signal requesting transfer of control.

The (e) may further include (e-3) storing, by the mobility device, information on the control transferred from the first remotely piloted station to the second remotely piloted station.

According to an aspect of the present disclosure, a device for remotely controlling a mobility device includes at least one processor that executes at least one instruction, wherein the at least one processor detects whether a communication link with the mobility device is established, transmits a first lost link signal to at least one neighboring remotely piloted station if a failure in the communication link with the mobility device is detected and transmits a broadcasting signal if a second lost link signal is received; and take over control of the mobility device if a signal requesting transfer of control from the mobility device.

The at least one processor may update and store flight information of the mobility device at a predetermined cycle, the flight information including at least one of a flight plan, flight status, last position, heading, and speed and, if the failure in the communication link with the mobility device is detected, transmit last flight information to a neighboring remotely piloted station.

The at least one processor may calculate a first predicted flight route based on the last flight information, determine an expected communication coverage area based on the last flight information and the first predicted flight route, and select at least one remotely piloted station located in the expected communication coverage area as the at least one neighboring remotely piloted station.

The at least one processor may calculate a preliminary predicted flight route based on last flight information of the mobility device and transmit the calculated preliminary predicted flight route to outside.

The at least one processor may compare the calculated preliminary predicted flight route, if the preliminary predicted flight route differs by more than a tolerance criterion, calculate a second predicted flight route based on a most commonly searched predicted point, which is selected from the predicted points searched at an arbitrary interval of n seconds.

The at least one processor may transmit an RPA detect signal to the outside if an ACK response signal is received, the ACK response signal being transmitted by the mobility device in response to reception of the broadcasting signal.

The at least one processor may suspend calculation of the preliminary predicted flight route and transmission of the preliminary predicted flight route to the outside if the RPA detect signal is received from the outside.

The at least one processor may control the mobility device based on the second preliminary predicted flight route after taking over the control of the mobility device.

The at least one processor may store information on the control transferred.

According to an aspect of the present disclosure, a system for remotely controlling a mobility device includes a mobility device that flies under control of a remotely piloted station that owns control of the mobility device, a first remotely piloted station that detects whether a communication link with the mobility device is established and, if the communication link is failed, transmits a lost link signal to at least one neighboring remotely piloted station, a second remotely piloted station located at a predetermined distance from the first remotely piloted station to transmit a broadcasting signal if the lost link signal is received, wherein the mobility device transfers the control of the mobility device to the second remotely piloted station if the mobility device receives the broadcasting signal.

The above description is merely illustrative of the technical idea of the present disclosure, and various modifications and variations may be made without departing from the essential characteristics of the present disclosure by those skilled in the art to which the present disclosure pertains. Accordingly, the one or more example embodiments disclosed in the present disclosure is not intended to limit the technical idea of the present disclosure but to describe the present disclosure, and the scope of the technical idea of the present disclosure is not limited by the example embodiment(s). The scope of protection of the present disclosure should be interpreted by the following claims, and all technical ideas within the scope equivalent thereto should be construed as being included in the scope of the present disclosure.

According to the present disclosure, if the communication link between a mobility device controlled by a remote pilot station and the remote pilot station has failed or is unstable, the mobility device may maintain the communication link between the mobility device and the remote pilot station by transferring control to a neighboring remote pilot station located on the expected flight route.

Accordingly, the present disclosure may increase the flight stability of a mobile device, reduce the cost of building a commercial infrastructure for a mobile device, and improve operational performance by expanding flight communication coverage. In addition, the increased operational stability further enhances the acceptance of unmanned flight.

Hereinabove, although the present disclosure has been described with reference to example embodiment(s) and the accompanying drawings, the present disclosure is not limited thereto, but may be variously modified and altered by those skilled in the art to which the present disclosure pertains without departing from the spirit and scope of the present disclosure claimed in the following claims.

## Claims

**1.** A method comprising:

from a first remote pilot station having control of a mobility device via a communication link with the mobility device, receiving, by a second remote pilot station, a lost link signal indicating a failure in the communication link, of the first remote pilot station, with the mobility device, wherein the second remote pilot station is one of at least one neighboring remote pilot station, of the first remote pilot station, that has received the lost link signal;

transmitting, by the second remote pilot station, a broadcast signal;

receiving, by the second remote pilot station from the mobility device, a response signal requesting transfer of control of the mobility device; and

remotely controlling, by the second remote pilot station and based on the response signal, one or more operations of the mobility device.

2. The method of claim 1, wherein the failure in the communication link comprises:
at least a threshold time amount elapsing after receiving, from the mobility device, flight information, wherein the flight information comprises at least one of: a flight plan for the mobility device, a flight status of the mobility device, a last position of the mobility device, a heading of the mobility device, or a speed of the mobility device.

3. The method of claim 1 or 2, wherein the receiving of the lost link signal comprises:
receiving, by the second remote pilot station from the first remote pilot station, flight information that was most recently sent, before the failure, to the first remote pilot station from the mobility device.

4. The method of claim 3, wherein the transmitting of the broadcast signal comprises:

   determining, by the second remote pilot station and based on the flight information, a predicted flight route of the mobility device; and
   transmitting, by the second remote pilot station, the predicted flight route to at least one other remote pilot station of the at least one neighboring remote pilot station of the first remote pilot station.

5. The method of anyone of claims 1-4, wherein the transmitting of the broadcast signal comprises:

   receiving, by the second remote pilot station from a plurality of remote pilot stations of the at least one neighboring remote pilot station of the first remote pilot station, a plurality of predicted flight routes of the mobility device;
   comparing, by the second remote pilot station, the plurality of predicted flight routes; and
   based on the plurality of predicted flight routes differing by more than a threshold amount, determining, by the second remote pilot station, a second predicted flight route based on a most commonly searched predicted point, which is selected from the plurality of predicted flight routes searched at a predetermined time interval.

6. The method of claim 5, wherein the broadcast signal comprises an address information associated with the second remote pilot station, wherein the response signal comprises an acknowledgement response signal, and wherein the method further comprises:
transmitting, by the second remote pilot station and based on receiving the acknowledgement response signal, a mobility device detect signal to the plurality of remote pilot stations, wherein the mobility device detect signal is configured to cause the plurality of remote pilot stations to suspend predicting of one or more flight routes of the mobility device.

7. The method of claim 5 or 6, wherein the remotely controlling of the one or more operations of the mobility device comprises:
remotely controlling, by the second remote pilot station, the one or more operations of the mobility device further based on the second predicted flight route.

8. The method of anyone of claims 1-7, wherein the receiving the response signal comprises:
taking over, by the second remote pilot station and based on the response signal, control of the mobility device from the first remote pilot station.

9. A remote pilot station comprising:

   a processor; and
   a memory storing at least one instruction that is configured, when executed by the processor communicating with the memory, to cause the remote pilot station to:

detect a failure in a communication link between the remote pilot station and a mobility device;

transmit, based on detecting the failure, a first lost link signal to at least one neighboring remote pilot station of the remote pilot station;

transmit, based on receiving a second lost link signal, a broadcast signal;

based on receiving, from the mobility device, a response signal requesting transfer of control of the mobility device, take over control of the mobility device; and

remotely control, based on the response signal, one or more operations of the mobility device.

10. The remote pilot station of claim 9, wherein the at least one instruction is configured, when executed by the processor communicating with the memory, to cause the remote pilot station to detect the failure by:

updating and storing flight information of the mobility device, wherein the flight information is received from the mobility device at predetermined time intervals, wherein the flight information comprises at least one of: a flight plan for the mobility device, a flight status of the mobility device, a last position of the mobility device, a heading of the mobility device, or a speed of the mobility device; and

determining that at least a threshold time amount has elapsed since a last transmission of the flight information from the mobility device.

11. The remote pilot station of claim 10, wherein the at least one instruction is configured, when executed by the processor communicating with the memory, to further cause the remote pilot station to:

determine, based on the flight information that was last received by the remote pilot station from the mobility device, a first predicted flight route;

determine, based on the flight information and the first predicted flight route, an expected communication coverage area of the mobility device; and

determine the at least one neighboring remote pilot station by selecting at least one remote pilot station that is located in the expected communication coverage area.

12. The remote pilot station of anyone of claims 9-11, wherein the at least one instruction is configured, when executed by the processor communicating with the memory, to further cause the remote pilot station to transmit the broadcast signal by:

receiving, from another remote pilot station, flight information of the mobility device;

determining, based on the flight information, a predicted flight route of the mobility device; and

transmitting the predicted flight route to one or more other remote pilot stations.

13. The remote pilot station of anyone of claims 9-12, wherein the at least one instruction is configured, when executed by the processor communicating with the memory, to cause the remote pilot station to transmit the broadcast signal by:

receiving, from a plurality of remote pilot stations, a plurality of predicted flight routes of the mobility device;

comparing the plurality of predicted flight routes; and

based on the plurality of predicted flight routes differing by more than a threshold value, determining a second predicted flight route based on a most commonly searched predicted point, which is selected from the plurality of predicted flight routes searched at a predetermined time interval.

14. The remote pilot station of claim 13, wherein the at least one instruction is configured, when executed by the processor communicating with the memory, to cause the remote pilot station to:

remotely control the one or more operations of the mobility device further based on the second predicted flight route; and

transmit, after transmitting the broadcast signal and based on receiving an acknowledge response from the mobility device, a mobility device detect signal.

15. A system, comprising:

a first remote pilot station having at least one neighboring remote pilot station;

a second remote pilot station located at a predetermined distance away from the first remote pilot station, wherein the second remote pilot station is one of the at least one neighboring remote pilot station of the first remote pilot station; and
a mobility device configured to fly under control of the first remote pilot station,
wherein the first remote pilot station is configured to:

detect a failure in a communication link between the first remote pilot station and the mobility device; and
transmit, based on detecting the failure, a lost link signal to the at least one neighboring remote pilot station,

wherein the second remote pilot station is configured to:
transmit, based on receiving the lost link signal, a broadcast signal, and
wherein the mobility device is further configured to:

send, to the second remote pilot station and based on receiving the broadcast signal, a response signal requesting transfer control of the mobility device; and
fly, based on sending the response signal to the second remote pilot station, under control of the second remote pilot station.

RPS_A
132

RPS_0
120

RPA
110

RPS_B
134

RPS_C
136

FIG.1

```
┌──────────────────┐
│  COMMUNICATION   │
│     DEVICE       │
│       121        │
└──────────────────┘

┌──────────────────┐
│    PROCESSOR     │
│       125        │
└──────────────────┘

┌──────────────────┐
│     MEMORY       │
│       123        │
└──────────────────┘
```

FIG.2

Airspace A(10)                    Airspace B(20)

RPS_A
(132)

RPS_B
(134)

RPS_C
(136)

RPS_0
(120)

100

FIG.3

```
┌─────────────────┐              ┌─────────────────┐              ┌─────────────────┐
│  FIRST REMOTE   │~120          │  SECOND REMOTE  │~132          │    REMOTELY     │~110
│  PILOT STATION  │              │  PILOT STATION  │              │ PILOTED AIRCRAFT│
└────────┬────────┘              └─────────────────┘              └────────┬────────┘
         │◄──────────────────┐                                             │◄───────────────────┐
         ▼                   │                                             ▼                     │
┌─────────────────────────┐  │                                  ┌─────────────────────────┐      │
│ MONITOR COMMUNICATION   │~S101│                               │ MONITOR COMMUNICATION   │~S113 │
│     LINK STATUS         │  │                                  │     LINK STATUS         │      │
└────────┬────────────────┘  │                                  └────────┬────────────────┘      │
         ▼              S103  │                                           ▼              S115     │
      ╱────────────────────╲  │                                       ╱──────────────────╲        │
     ╱ HAS COMMUNICATION     ╲─┘                                     ╱  HAS COMMUNICATION  ╲───────┘
     ╲    LINK FAILED?       ╱                                       ╲    LINK FAILED?     ╱
      ╲────────────────────╱                                          ╲──────────────────╱
         ▼                                                               ▼
┌─────────────────────────┐                                  ┌─────────────────────────┐
│ STORE LAST FLIGHT       │~S105                             │      WAIT TO RECEIVE     │~S117
│ INFORMATION OF RPA      │                                  │  COMMUNICATION LINK SIGNAL│
└────────┬────────────────┘                                  └────────┬────────────────┘
         ▼               S107                                          │
┌──────────────────────────────┐  ┌──────────────────────────┐        │
│ TRANSMIT LAST FLIGHT INFORMATION│ │ RECEIVE LOST LINK SIGNAL AND│~S109│
│ OF RPA AND LOST LINK SIGNAL TO ├─►│ LAST FLIGHT INFORMATION OF RPA│   │
│ NEIGHBORING RPS                │  └────────┬─────────────────┘        │
└──────────────────────────────┘           ▼            S111           │
                                   ┌──────────────────────────┐         ▼
                                   │ TRANSMIT BROADCASTING    ├──►┌─────────────────────────┐
                                   │        SIGNAL            │   │ RECEIVE BROADCASTING SIGNAL│~S119
                                   └────────┬─────────────────┘   └────────┬────────────────┘
                                            ▼            S125              ▼
                                   ┌──────────────────────────┐   ┌─────────────────────────┐
                                   │ RECEIVE SIGNAL REQUESTING │◄──┤ TRANSMIT SIGNAL REQUESTING│~S121
                                   │   TRANSFER OF CONTROL     │   │ TRANSFER OF CONTROL TO   │
                                   └────────┬─────────────────┘   │     SECOND RPS           │
                                            ▼                      └────────┬────────────────┘
                                   ┌──────────────────────────┐            ▼
                                   │ TAKE OVER CONTROL OF RPA │~S127 ┌─────────────────────────┐
                                   └────────┬─────────────────┘      │  TRANSFER CONTROL OF    │~S123
                                            ▼                        │   RPA TO SECOND PRS     │
                                   ┌──────────────────────────┐      └─────────────────────────┘
                                   │ REMOTELY CONTROL RPA     │~S129
                                   └──────────────────────────┘
```

FIG.4

EP 4 741 972 A1

1000

1300

MEMORY

1310        1320

ROM        RAM

1100

PROCESSOR

1400

USER INTERFACE
INPUT DEVICE

1500

USER INTERFACE
OUTPUT DEVICE

1200

1600

STORAGE

1700

NETWORK
INTERFACE

FIG.5

**EUROPEAN SEARCH REPORT**

Europäisches Patentamt
European Patent Office
Office européen des brevets

**Application Number**

EP 25 19 7876

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 11 242 143 B2 (SKYDIO INC [US]) 8 February 2022 (2022-02-08) * column 15, line 14 - column 16, line 25; claims 1-2,5,7,9,21,22,25,27,29; figures 4A,5,7 * * column 17, lines 14-20 * ----- | 1-15 | INV. G05D1/227 G05D109/20 G08C17/00 G08C13/00 |
| A | US 10 084 615 B2 (ELECTRONICS & TELECOMMUNICATIONS RES INST [KR]) 25 September 2018 (2018-09-25) * column 13, line 14 - column 15, line 20; claims 1,3,6,9; figures 5-6 * ----- | 1-15 | |
| A | KR 2018 0054391 A (ELECTRONICS & TELECOMMUNICATIONS RES INST [KR]) 24 May 2018 (2018-05-24) * paragraphs [0114], [0116] - [0118], [0121], [0131], [0133] - [0134], [0137] - [0138]; claim 1; figures 3,5 * ----- | 1-15 | |
| A | Gonçalves Rui: "STANAG 4586 Compliant Command and Control Operational Interface for Multiple UAVs", HUMOUS'10 - Humans Operating Unmanned Systems, 29 April 2010 (2010-04-29), XP093362786, Toulouse Retrieved from the Internet: URL:https://www.researchgate.net/publication/370414800_A_STANAG_4586_Compliant_Command_and_Control_Operational_Interface_for_Multiple_UAVs [retrieved on 2026-02-05] * the whole document * ----- | 1-15 | TECHNICAL FIELDS SEARCHED (IPC) G05D |

The present search report has been drawn up for all claims

| Place of search | Date of completion of the search | Examiner |
|---|---|---|
| Munich | 5 February 2026 | Mallet, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 7876

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2026

| Patent document cited in search report | | Publication date | Patent family member(s) | | Publication date |
|---|---|---|---|---|---|
| US 11242143 | B2 | 08-02-2022 | US | 2017357273 A1 | 14-12-2017 |
| | | | US | 2022185471 A1 | 16-06-2022 |
| | | | US | 2024262496 A1 | 08-08-2024 |
| | | | US | 20260028119 A1 | 29-01-2026 |
| US 10084615 | B2 | 25-09-2018 | US | 2018139074 A1 | 17-05-2018 |
| | | | US | 2019013969 A1 | 10-01-2019 |
| KR 20180054391 | A | 24-05-2018 | NONE | | |

EPO FORM P0459

For more details about this annex : see Official Journal of the European Patent Office, No. 12/82

**EP 4 741 972 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240158451